# EUROPEAN PATENT APPLICATION

(11) **EP 3 627 292 A1**
(43) Date of publication of application: **25.03.2020**
(21) Application number: 18210797.9
(22) Date of filing: 06.12.2018
(51) Int. Cl.: G06F 3/0346, G06F 3/03

(54) **TRACKING METHOD AND TRACKING SYSTEM USING THE SAME**

(30) Priority: 19.09.2018 US 201816136182
(71) Applicant: XRSpace CO., LTD., Taoyuan City 330 (TW)
(72) Inventor: Chou, Peter, 100 Taipei City (TW); Hsieh, Yi-Kang, 310 Hsinchu County (TW); Lin, Chun-Wei, 330 Taoyuan City (TW); Wu, Chia-Wei, 231 New Taipei City (TW)
(74) Representative: Straus, Alexander

(57) **Abstract**

A tracking method (30) of an object is provided, wherein the object comprises an inertial measurement unit for generating a first tracking information, and a plurality of identification dots (d1-d4) are arranged on a surface of the object. The tracking method (30) comprises obtaining an image (I1) having the object to determine a number of identification dots (d1-d4) and corresponding identification dot captured in the image (I1), wherein the number of identification dots is an integer greater than or equal to zero; determining a second tracking information according to the first tracking information (304); and calibrating the second tracking information according to the image (I1) (306).

## Description

### Field of the Invention

The present disclosure relates to a tracking method and a tracking system using the same.

### Background of the Invention

With the population of the virtual reality (VR), augmented reality (AR), mixed reality (MR) and extended reality (XR) devices and the interactive system, users may easily experience the VR/AR/MR/XR environment provided by the interactive system with the aids of VR/AR/MR/XR devices, such that the users may completely immerge themselves into the VR/AR/MR/XR environment. In order to improve the user experience, a tracking system is usually employed for capturing hand movements of the user to generate corresponding response in the VR/AR/MR/XR environment. Therefore, the user may operate the interactive system with a variety of hand gestures or body movements, for enhancing the user experience.

In the prior art, to precisely determine the hand movement of the user, the interactive system is required to be equipped with a controller capable of generating a 6 degrees of freedom (Dof) information, which largely increases the hardware cost of the interactive system. In another aspect, the interactive system equipped with the 3Dof controller is not able to precisely determine the hand movement of the user, which significantly degrades the user experience. In brief, the interactive system takes the user either the high hardware cost or the poor user experience. Therefore, there is necessity to improve over the prior art.

### Summary of the Invention

Therefore, the present application provides a tracking method and a tracking system capable of tracking the controller while utilizing the controller of 3Dof.

This is achieved by a tracking method according to the independent claim 1 or by a tracking system according to the independent claim 6 here below. The dependent claims pertain to corresponding further developments and improvements.

As will be seen more clearly from the detailed description following below, an embodiment of the present disclosure discloses a tracking method of an object, wherein the object comprises an inertial measurement unit (IMU) for generating a first tracking information, and a plurality of identification dots are arranged on a surface of the object. The tracking method comprises obtaining an image having the object to determine a number of identification dots and corresponding identification dot captured in the image, wherein the number of identification dots is an integer greater than or equal to zero; determining a second tracking information according to the first tracking information; and calibrating the second tracking information according to the image.

In another aspect, an embodiment of the present disclosure further discloses a tracking system, for tracking an object, wherein the object comprises an inertial measurement unit (IMU) for generating a first tracking information, and a plurality of identification dots are arranged on a surface of the object. The tracking system comprises an image acquisition module, for obtaining an image having the object to determine a number of identification dots and corresponding identification dot captured in the image, wherein the number of identification dots is an integer greater than or equal to zero; a processing unit; and a storage unit, for storing a program code to instruct the processing unit to perform the following steps determining a second tracking information according to the first tracking information; and calibrating the second tracking information according to the image.

### Brief Description of the Drawings

FIG. 1 is a schematic diagram of a tracking system according to an embodiment of the present disclosure.
FIG. 2 is a schematic diagram of a controller according to an embodiment of the present disclosure.
FIG. 3 is a schematic diagram of a process according to an embodiment of the present disclosure.
FIG. 4 is a schematic diagram of another process according to an embodiment of the present disclosure.
FIGs. 5-8 are schematic diagrams of four preset images according to an embodiment of the present disclosure.
FIG. 9 is a schematic diagram of a reset image according to an embodiment of the present disclosure.

### Detailed Description

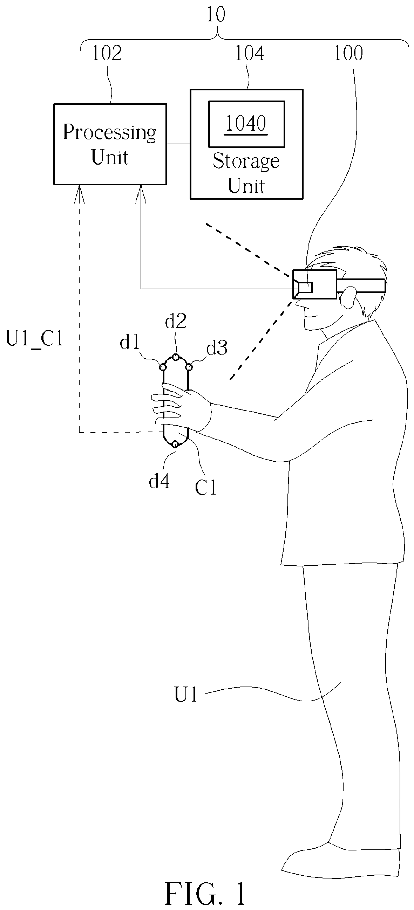

Please refer to FIG. 1, which is a schematic diagram of a tracking system 10 according to an embodiment of the present disclosure. The tracking system 10 may track motions of a controller C1, and the controller C1 is held by the user U1, for operating an interactive system. In detail, the interactive system is a system which provides a VR/AR/MR/XR environment for the user U1 to indulge himself/herself in. In order to simulate interactions vividly in the VR/AR/MR/XR environment, the interactive system is preferably designed for reading body movements of the user to generate realistic responses. An inertial measurement unit inside the controller C1 is capable of generating a kinetic information corresponding to a hand movement of the user U1. As such, the interactive system may determine the hand movement of the user U1 according to a controller information U1_c1 generated by the controller C1. However, the controller information U1_c1 generated by the controller C1 may not accurately indicate the hand movement of the user U1, which thus leads to deviations or, even worse, a misjudgment in the interactive system and further deteriorates the user experience to the interactive system. Therefore, the present disclosure provides the tracking system 10 for calibrating the controller information U1_c1, such that a calibrated controller information U1_c1 may accurately indicate the hand movement of the user U1, for the interactive system to generate proper responses. In other words, with the aids of the tracking system 10, the hardware cost to the interactive system may be reduced and the user experience to the interactive system may be significantly improved.

It is noted that the controller information U1_c1 generated by the controller C1 may be an information of 3 degrees of freedom (3Dof), and the tracking system 10 is capable of generating the controller information U1_c1t of 6Dof according to the controller information U1_c1 of 3Dof. Of course, the controller information U1_c1t directly obtained from the controller information U1_c1 possesses errors and may not precisely indicate the hand movement of the user U1. Therefore, with the calibration of the tracking system 10 performed to the controller information U1_c1t, it only takes the interactive system utilizing the controller of 3Dof to precisely track the hand movement of the user U1.

In detail, the tracking system 10 comprises an image acquisition module 100, a processing unit 102, and a storage unit 104. The image acquisition module 100 is utilized for obtaining an image I1 which comprises the controller C1. The processing unit 102 is coupled to the controller C1 and the image acquisition module 100, for determining the controller information U1_c1t, and calibrating the controller information U1_c1t according to the image I1. The storage unit 104 stores a program code 1040 for instructing the processing unit 102 to execute steps of a process.

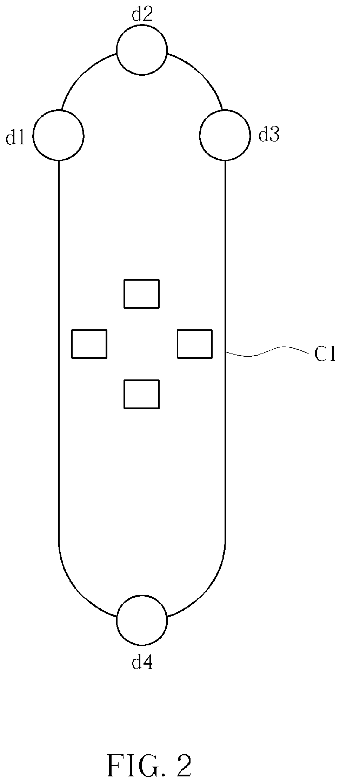

Moreover, please refer to FIG. 2, which is a schematic diagram of a controller C1 according to an embodiment of the present disclosure. As shown in FIG. 2, the controller C1 comprises four identification dots d1-d4, wherein each identification dot has different color, such that the processing unit 102 may accordingly calibrate the controller information U1_c1t according to the identification dots captured from the image I1. More specifically, the processing unit 102 may determine where the controller C1 is located and where the controller C1 is pointing according to an analysis performed by the processing unit 102 to the image 11.

In the embodiment, the colors of the identification dots d1-d4 are respectively red, green, blue and white. Therefore, image quality requirements of the image I1 can be reduced and identification speed and accuracy can be improved. In another embodiment, shapes and/or appearance of he identification dots d1-d4 may be different. For example, the shapes of the identification dots d1-d4 are respectively square, triangle, rectangle and trapezoid. Therefore, the and/or appearance can replace or combined use with the color for reducing image quality requirements of the image I1 and improving identification speed and accuracy.

and the image acquisition module 100 may be a camera, a video recorder, or a camera integrated on a portable electronic device, etc., as long as the processing unit 102 may distinguish the identification dots d1-d4 according to the image I1 captured by the image acquisition module 100. In the embodiment, the image acquisition module 100 is integrated with a VR/AR/MR/XR display device, such that the image acquisition module 100 may obtain the image I1 from a subjective perspective of the user U1. The processing unit 102 may be a microprocessor or an application-specific integrated circuit (ASIC). The storage unit 104 may be read-only memory (ROM), random-access memory (RAM), nonvolatile memory (e.g., an electrically erasable programmable read only memory (EEPROM) or a flash memory), CD-ROMs, magnetic tapes, floppy disks, optical data storage devices, etc., and not limited thereto.

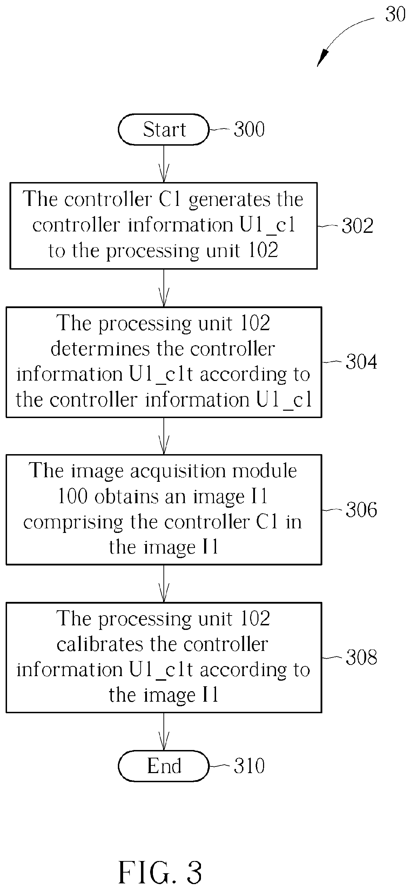

The operations of the tracking system 10 may be summarized as a process 30, as shown in FIG. 3. The process 30 comprises the following steps:

Step 300: Start.

Step 302: The controller C1 generates the controller information U1_c1 to the processing unit 102.

Step 304: The processing unit 102 determines the controller information U1_c1t according to the controller information U1_c1.

Step 306: The image acquisition module 100 obtains an image I1 comprising the controller C1 in the image I1.

Step 308: The processing unit 102 calibrates the controller information U1_c1t according to the image I1.

Step 310: End.

According to the process 30, in Step 302, the controller C1 may generate the controller information U1_c1 to the processing unit 102 of the tracking system 10, for indicating the hand movement of the user U1. In Step 304, the processing unit 102 may determine the controller information U1_c1t according to the controller information U1_c1 generated by the controller C1. More particularly, the controller information U1_c1 of 3Dof comprises a triaxial acceleration information of the controller C1, such that the processing unit 102 is capable of determining a triaxial displacement information of the controller C1 through performing a double integration operation to the controller information U1_c1. Therefore, the controller information U1_c1t of 6DoF may be obtained through merging the triaxial displacement information with the controller information U1_c1 by the processing unit 102. However, the triaxial acceleration information of the controller C1 obtained by the processing unit 102 possesses errors, which is repeatedly accumulated every time the user U1 makes the hand movement. Thus, the controller information U1_c1t becomes more inaccurate and deviated with the growing errors accumulated in the controller information U1_cit. As a result, the controller information U1_a2, comprising the triaxial displacement information obtained through the double integration operation to the controller information U1_c1, is inaccurate and may not be directly utilized for indicating the correct hand movement of the user U1. Therefore, in Step 306, the image acquisition module 100 of the tracking system 10 may obtain the image I1 which comprises the controller C1 in the image I1. Then, in Step 308, the processing unit 102 may determine where the controller C1 is located and where the controller C1 is pointing according to the image I1. More particularly, the processing unit 102 may determine a controller coordinate and a controller direction according to the identification dots d1-d4 of the controller C1 captured in the image I1. As such, with the controller coordinate and the controller direction, the processing unit 102 may calibrate the controller information U1_c1t to precisely indicate the hand movement of the user U1, which may further lower hardware cost of the interactive system and improve the user experience to the interactive system and the tracking system 10.

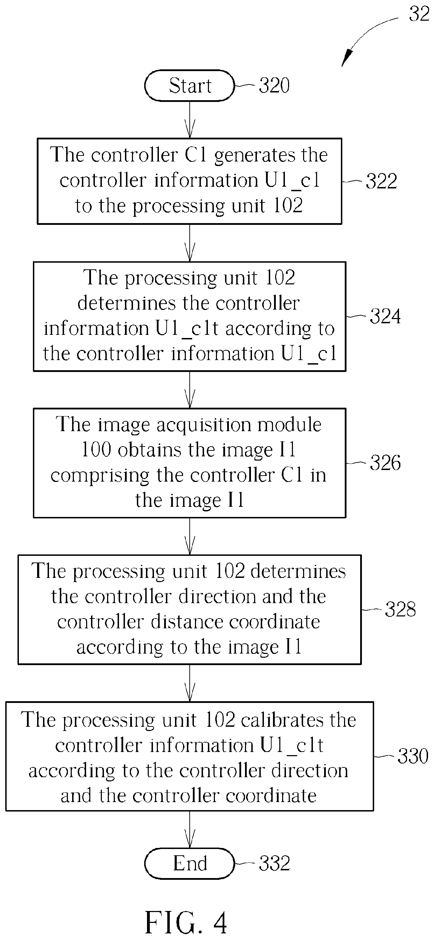

The detailed operations of the tracking system 10 mentioned above may be summarized as another process 32, as shown in FIG. 4. The process 32 comprises the following steps:

Step 320: Start.

Step 322: The controller C1 generates the controller information U1_c1 to the processing unit 102.

Step 324: The processing unit 102 determines the controller information

U1_c1t according to the controller information U1_c1.

Step 326: The image acquisition module 100 obtains the image I1 comprising the controller C1 in the image I1.

Step 328: The processing unit 102 determines the controller direction and the controller distance coordinate according to the image I1.

Step 330: The processing unit 102 calibrates the controller information U1_c1t according to the controller direction and the controller coordinate.

Step 332: End.

Steps 320-326 are similar to Steps 300-306, which are not narrated herein.

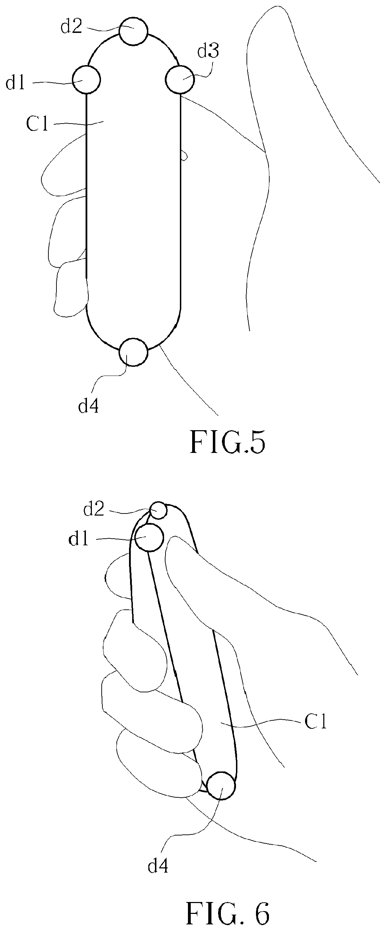

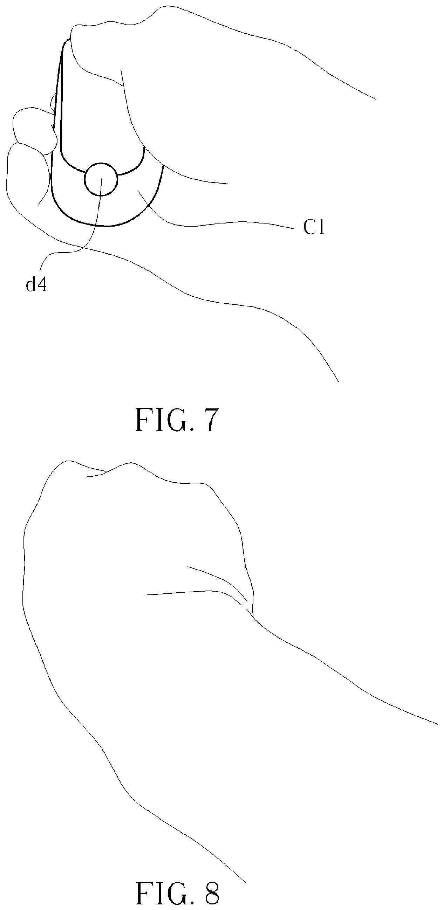

In Step 328, the processing unit 100 specifies the controller coordinate and the controller direction through analyzing the identification dots d1-d4 captured in the image I1. In order to precisely indicate the controller coordinate and the controller direction, the processing unit 100 analyzes the identification dots d1-d4 captured in the image I1. For example, please refer to FIGs. 5-8, which illustrate four preset images P1-P4 that the controller C1 is pointing at the different controller directions. Notably, the four preset images P1-P4 may be stored in the storage unit 104 for the processing unit 102 to access and compare. Each preset image respectively corresponds to a preset controller direction and a preset controller direction, such that the processing unit 102 may compare the four preset images P1-P4 with the image I1, for determining the controller direction and the controller coordinate according to the identification dots d1-d4 captured in the image 11. As shown in FIG. 5, the user U1 is holding the controller C1 with revealing the identification dots d1, d2 in the preset image P1. As such, when the processing unit 102 detects that only the identification dots d1, d2 are captured in the image I1, the processing unit 102 may obtain the preset controller direction and the preset controller coordinate corresponding to the preset image P1. In addition, the processing unit 102 may further calculate a distance and an angle between the identification dots d1, d2 in the image I1. Therefore, the processing unit 102 may refine the preset controller direction and the preset controller coordinate corresponding to the preset image P1 according to the above calculation, and thus the controller direction and the controller coordinate corresponding to image I1 may be generated. As shown in FIG. 6, when the processing unit 102 specifies that the identification dots d2, d3 are captured in the image 11, the processing unit 102 may determine that the image I1 corresponds to the preset image P2, and thus, obtain the preset controller direction and the preset controller coordinate corresponding to preset image P2. After further analyzing the distance and the direction between the identification dots d2, d3, the controller coordinate and the controller direction may be precisely obtained. In the same way, as shown in FIGs. 7, 8, the preset image P3 with the identification dot d4 and the preset image P4 with no identification dots are illustrated. Therefore, the processing unit 102 may compare the image I1 with the preset images P3, P4 when only the identification dot d4 and no identification dots are captured in the image I1, for obtaining the preset controller direction and the preset controller coordinate corresponding to the image P3, P4. In other words, the processing unit 102 may obtain the image I1 having the object (the controller C1) to determine a number of identification dots and the corresponding identification dots d1-d4 captured in the image I1, wherein the number of identification dots is an integer greater than or equal to zero.

Therefore, in Step 330, the processing unit 102 may calibrate the controller information U1_c1t according to the controller direction and the controller coordinate obtained in Step 328, for improving the user experience to the interactive system and the tracking system 10. Through the constant and periodical calibration to the controller information U1_c1t by the processing unit 102, errors obtained through the double integration operation may be preferably removed for obtaining the precise controller information U1_c1 to accurately point out the hand movement of the user U1 without errors, further improving user experience to the interactive system and the tracking system.

Notably, the embodiments stated in the above are utilized for illustrating the concept of the present disclosure. Those skilled in the art may make modifications and alterations accordingly, and not limited herein. According to different applications and design concepts, the tracking system of the present disclosure may be altered. For example, the image acquisition module is not limited to the camera integrated with the VR/AR/MR/XR display device only. In one embodiment, the image acquisition module may be a detachedly camera disposed in front of the user, such that the image acquisition module may obtain the images comprising the identification dots from another perspective, benefitting the analysis of the processing unit 102 to the image. In another embodiment, an amount of the image acquisition module is not limited to only one either, which the tracking system may comprise more than one image acquisition module, such that the tracking system may obtain multiple images from different perspectives. Therefore, a dead zone of the identification dots disposed on the controller may be significantly improved, and an accuracy of the tracking system may be accordingly improved.

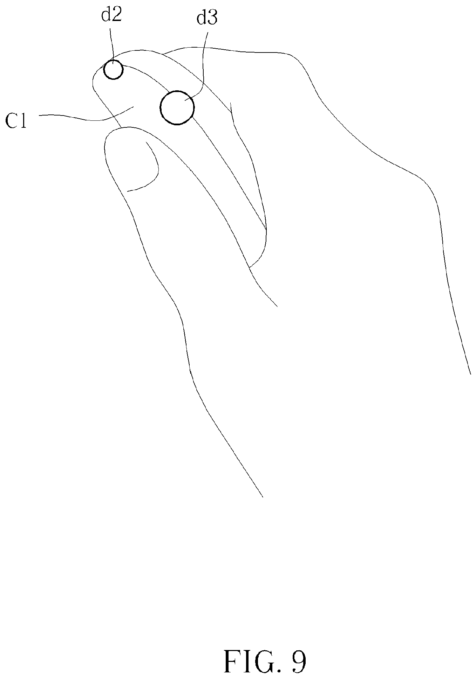

In another aspect, despite the preset images P1-P4 stored in the storage unit 104, the storage unit 104 may further store a reset image P5 for better calibrating the controller information U1_c1t. More specifically, the hand movement performed by the user U1 though seems to be chaotic and unpredictable, there are certain habitual patterns followed by most users that the tracking system 10 may accordingly calibrate the controller information U1_c1t. Notably, please refer to FIG. 9, which is a schematic diagram of a reset image P5 according to an embodiment of the present disclosure. As shown in FIG. 9, the reset image P5 illustrates a standing by position performed by the user U1, wherein the reset image P5 corresponds to a reset coordinate and a reset direction. Under such a circumstance, when the processing unit 102 determines that a direction difference between the reset direction and the controller direction is smaller than a preset direction value, and a coordinate difference between the reset coordinate and the controller coordinate is smaller than a preset coordinate value, the processing unit 102 may determine that the user U1 is returned to the standing by position. Therefore, the processing unit 102 may set the controller direction equal to the reset direction and set the controller coordinate equal to the reset coordinate, for calibrating the controller information U1_c1t.

In other words, every time when the hand of the user U1 is returned to the standing by position, the tracking system 10 may accordingly reset the controller information U1_c1t for eliminating errors. Therefore, the tracking system 10 may precisely determine the controller information U1_c1t of 6Dof through the image I1 obtained by the image acquisition module 100 and the preset image stored in the storage unit 104, further improving the user experience to the interactive system and the tracking system.

In the prior art, the interactive system is required to arrange a controller capable of generating a 6Dof information to precisely track the hand movement of the user. In another aspect, the interactive system without arranging a controller of 6Dof is incapable of precisely tracking the hand movement of the user, which may result in the poor user experience to the interactive system. As such, the interactive system either takes the user high hardware cost or the bad user experience. Therefore, the present disclosure provides the tracking system capable of obtaining images comprising the controller. As such, the tracking system may generate the controller information of 6Dof according to the controller information of 3Dof delivered from the controller. In addition, the tracking system further analyzes the tracking image for calibrating the controller information of 6Dof, so as to remove errors out of it. In summary, through the image acquisition module, the tracking system may precisely generate the controller information of 6Dof according to the controller information of 3Dof, further reduces hardware requirement and improves the user experience.

In the above description, the tracking system 10 and the process 30, 32 track the controller C1, and the present disclosure is not limited thereto. For example, the tracking system 10 and the process 30, 32 can track other objects, for example, a cell phone or a tablet comprising an inertial measurement unit.

The object with the inertial measurement unit can generate a first tracking information. The tracking system 10 and the process 30, 32 can determine a second tracking information according to the first tracking information. That is, the first controller information U1_c1 may or may not be the first tracking information or comprised in the first tracking information, and the second controller information U1_c1t may or may not be the second tracking information or comprised in the second tracking information.

Therefore, although the many paragraphs of the present disclosure are related to a utilization in a special application, that is, to improve the tracking function of a controller and have a lot of specific advantages in the controller's application, the present disclosure also can be utilized in other application.

## Claims

1. A tracking method (30) of an object, wherein the object comprises an inertial measurement unit for generating a first tracking information, and a plurality of identification dots (d1-d4) are arranged on a surface of the object, the tracking method (30) **characterized by** comprising:
obtaining an image (11) having the object to determine a number of identification dots (d1-d4) and corresponding identification dot captured in the image (11), wherein the number of identification dots is an integer greater than or equal to zero;
determining a second tracking information according to the first tracking information (304); and
calibrating the second tracking information according to the image (11) (306).

2. The tracking method (30) of claim 1, **characterized in that** the plurality of identification dots (d1-d4) comprise a first dot (d1) having a first color, a second dot (d2) having a second color, a third dot (d3) having a third color a fourth dot (d4) having a fourth color and the first color, the second color, the third color and the fourth color are different.

3. The tracking method (30) of claim 2, **characterized in that** the first dot (d1), the second dot (d2), the third dot (d3) and the fourth dot (d4) are arranged in a same plane, and any three of the first dot (d1), the second dot (d2), the third dot (d3) and the fourth dot (d4) are not arranged collinearly.

4. The tracking method (30) of claims 1-3, **characterized in that** the object comprises a controller (C1), the first tracking information comprises a first controller information (U1_c1) and the second tracking information comprises a second controller information (U1_c1t); or, the object is the controller (C1), the first tracking information is the first controller information (U1_c1), and the second tracking information is the second controller information (U1_c1t).

5. The tracking method (30) of claim 4, **characterized in that** the first controller information (U1_c1) is a 3 degrees of freedom, abbreviated to 3Dof hereinafter, information, and the second controller information (U1_c1t) is a 6Dof information.

6. The tracking method (30) of claim 5, **characterized in that** determining the second controller information (U1_c1t) according to the first controller information (U1_c1) (304) is performing an integration operation to the first controller information (U1_c1) to obtain the second controller information (U1_c1t).

7. The tracking method (30) of claim 5, **characterized in that** the step of calibrating the second controller information (U1_c1t) according to the image (11) (306) comprises:
determining a third controller information according to the image (11); and
calibrating the second controller information (U1_c1t) according to the third controller information;
wherein the third controller information is a 6Dof information.

8. A tracking system (10), for tracking an object, wherein the object comprises an inertial measurement unit for generating a first tracking information, and a plurality of identification dots (d1-d4) are arranged on a surface of the object, the tracking system (10) **characterized by** comprising:
an image acquisition module (100), for obtaining an image (11) having the object to determine a number of identification dots (d1-d4) and corresponding identification dot captured in the image (11), wherein the number of identification dots is an integer greater than or equal to zero ;
a processing unit (102); and
a storage unit (104), for storing a program code (1040) to instruct the processing unit (102) to perform the following steps:
determining a second tracking information according to the first tracking information; and
calibrating the second tracking information according to the image (11).

9. The tracking system (10) of claim 8, **characterized in that** the plurality of identification dots (d1-d4) comprise a first dot (d1) having a first color, a second dot (d2) having a second color, a third dot (d3) having a third color, a fourth dot (d4) having a fourth color and the first color, the second color, the third color and the fourth color are different.

10. The tracking system (10) of claim 8, **characterized in that** the first dot (d1), the second dot (d2), the third dot (d3) and the fourth dot (d4) are arranged in a same plane, and any three of the first dot (d1), the second dot (d2), the third dot (d3) and the fourth dot (d4) are not arranged collinearly.

11. The tracking system (10) of claims 8-10, **characterized in that** the object comprises a controller (C1), the first tracking information comprises a first controller information (U1_c1) and the second tracking information comprises a second controller information (U1_c1t); or, the object is the controller (C1), the first tracking information is the first controller information (U1_c1), and the second tracking information is the second controller information (U1_c1t).

12. The tracking system (10) of claim 11, **characterized in that** the first controller information (U1_c1) is a 3 degrees of freedom, abbreviated to 3Dof hereinafter, information, and the second controller information (U1_c1t) is a 6Dof information.

13. The tracking system (10) of claim 12, **characterized in that** the processing unit (102) performs an integration operation to the first controller information (U1_c1) to obtain the second controller information (U1_c1t) for determining the second controller information (U1_c1t) according to the first controller information (U1_c1).

14. The tracking system (10) of claim 12, **characterized in that** the processing unit (102) performs the following steps, for calibrating the second controller information (U1_c1t) according to the image (11):
determining a third controller information according to the image (11); and
calibrating the second controller information (U1_c1t) according to the third controller information;
wherein the third controller information is a 6Dof information.
